# FASCICULE DE BREVET EUROPEEN

(11) **EP 0 861 215 B1**
(45) Date de publication et mention de la délivrance du brevet: **10.10.2001**
(21) Numéro de dépôt: 96938269.6
(22) Date de dépôt: 07.11.1996
(51) Int. Cl.: C03B 37/012, C03C 13/04

(54) **PROCEDE DE FABRICATION D'UNE FIBRE OPTIQUE MONOMODE ET AMPLIFICATEUR OPTIQUE UTILISANT UNE TELLE FIBRE**
VERFAHREN ZUR HERSTELLEN EINER OPTISCHEN EINMODENFASER UND OPTISCHER VERSTÄRKER MIT DIESER FASER
METHOD FOR MAKING A SINGLE-MODE OPTICAL FIBRE AND OPTICAL AMPLIFIER USING SAID FIBRE

(30) Priorité: 13.11.1995 FR 9513416
(43) Date de publication de la demande: 02.09.1998
(73) Titulaire: ALCATEL, 75008 Paris (FR)
(72) Inventeur: CHIQUET, Frédéric, F-91300 Massy (FR); LE THUAUT, Marylise, F-78990 Elancourt (FR); GIRARD, Jean-Jacques, F-91180 Saint-Germain-les-Arpajon (FR); BANIEL, Pascal, F-91210 Draveil (FR)
(74) Mandataire: Lamoureux, Bernard
(86) Numéro de dépôt international: FR9601752
(87) Numéro de publication internationale: WO9718169

(56) Documents cités:
- EP-A- 0 568 097
- WO-A-89/00707
- GB-A- 1 473 779
- GB-A- 2 071 351
- US-A- 4 283 213
- US-A- 4 596 589
- PATENT ABSTRACTS OF JAPAN vol. 18, no. 288 (C-1207), 2 Juin 1994 & JP,A,06 056473 (FURUKAWA ELECTRIC CO., LTD.), 1 Mars 1994,
- PATENT ABSTRACTS OF JAPAN vol. 18, no. 625 (C-1279), 29 Novembre 1994 & JP,A,06 239637 (NT&T CORP.), 30 Août 1994,
- JOURNAL OF MATERIALS SCIENCE LETTERS, vol. 10, no. 4, 15 Février 1991, LONDON, GB, pages 241-242, XP000249065 W.J.CHO ET AL.: "Fibre-in tube casting for single-mode fluoride glass fibre"

## Description

La présente invention concerne de manière générale la fabrication de préforme pour fibre optique monomode et fibre optique monomode correspondante. Elle trouve application dans le domaine des télécommunications par fibre optique. A titre non limitatif, elle s'applique aux technologies verre fluoré, polymère, etc... En particulier, l'invention peut être utilisée dans la réalisation d'amplificateurs optiques économiquement viables possédant des faibles pertes d'épissures entre portion de fibre amplificatrice et fibres de ligne et une atténuation spectrale compatible avec les rendements de pompage requis.

La fabrication d'une fibre optique comprend deux étapes successives qui sont l'élaboration d'une préforme et le fibrage de cette préforme pour l'obtention d'une fibre optique.

L'utilisation de l'une des techniques de type CVD (Chemical Vapour Deposition) rappelées dans le document intitulé "Preform Technologies for Optical Fibers" de D. DORN et C. LE SERGENT publié dans "Electrical Communication, vol.62, N° 3/4 - 1988" pour l'élaboration d'une préforme en verre fluoré ou polymère ne donne pas des résultats satisfaisants notamment en terme d'atténuation. Il est alors mis en oeuvre par exemple une technique de type "Built-in casting" bien connu de l'homme de l'art et décrite dans l'article de S. Mitachi, T. Miyashita et T. Kanamori, Electronics Letters, vol.17, pp. 591 et suivantes (1981). Cette technique utilise un moule cylindrique creux possédant un fond d'obturation. Un matériau de verre fondu destiné à former la gaine est versé dans ce moule. Avant que ce matériau de verre de gaine formant un cylindre plein dans le moule ne se soit complètement solidifié, on retire une portion centrale cylindrique du cylindre plein que l'on remplit d'un matériau de verre de coeur fondu. En résultat, après refroidissement, est obtenue une préforme initiale, sous la forme d'un barreau, comprenant une zone de coeur centrale et une zone de gaine périphérique. Lors de l'étape de fibrage, la fibre optique est tirée à partir de cette préforme. Cette fibre comprend un coeur et une gaine enveloppant ce coeur. Elle possède un rapport entre diamètre de coeur et diamètre de fibre identique au rapport entre le diamètre de la zone de coeur et le diamètre de la préforme. Il y a donc conservation du rapport homothétique [diamètre coeur/diamètre total] entre fibre et préforme.

Pour obtenir une fibre optique monomode dans laquelle se propage un seul mode, il est nécessaire que celle-ci possède un coeur de diamètre relativement faible qui est fonction des longueurs d'onde utilisées. Or la technique du "Built-in casting", au même titre que les techniques dites "Suction casting" et "Rotational casting" respectivement décrites dans les articles de Y. OHISHI, S. SAKAGUCHI et S. TAKAHASHI, Electronics Letters, vol. 22, pp 1034 et suivantes (1986) et de DC. TRAN, CF. FISHER et GH. SIGEL, Electronics Letters, vol.18, pp.657 et suivantes (1982), ne permet pas d'obtenir une préforme initiale ayant un diamètre de coeur suffisamment faible. Selon une méthode connue, il est alors procédé à un étirement de la préforme initiale en une préforme dite préforme mère qui possède un diamètre de zone de coeur inférieur à celui de la préforme initiale. Cette préforme mère est ensuite introduite dans un tube manchon externe en verre de gaine de sorte qu'en résultat du fibrage, soit obtenue une fibre optique possédant le rapport désiré entre diamètre de coeur et diamètre de fibre. Le tube externe est par exemple obtenu par centrifugation, ou "rotational casting". Si le tube externe ne permet pas d'obtenir le rapport souhaité, il peut être procédé, par étirement, à la formation d'une seconde préforme mère à partir de la préforme mère et du tube externe. Cette seconde préforme mère est alors introduite dans un second tube externe. L'opération d'introduction d'une préforme mère dans un tube externe peut ainsi être répétée autant de fois que nécessaire pour atteindre le rapport souhaité. Il peut aussi être prévu que la préforme mère soit introduite dans plusieurs tubes externes concentriques et que le fibrage soit opéré à partir de l'ensemble ainsi obtenu.

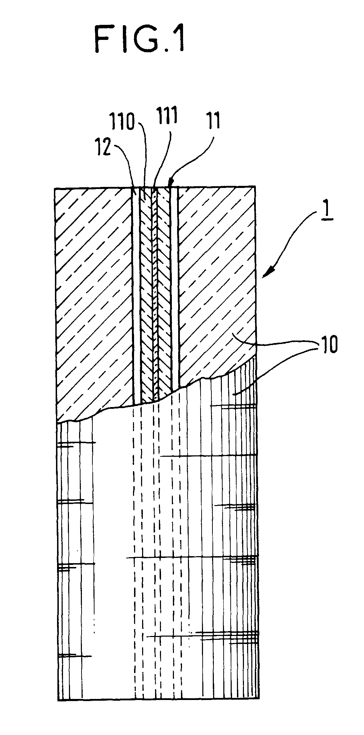

Cette étape de fibrage consiste à chauffer l'une des extrémités de l'ensemble constitué des préforme mère et tube externe et à tirer une fibre optique à partir de la préforme ainsi fondue par chauffage. Comme montré sur la figure 1, représentant en coupe longitudinale cet ensemble 1, la préforme mère 11 est introduite dans le tube externe 10 en laissant un volume libre 12 entre la surface cylindrique extérieure de la préforme mère 11 et la surface cylindrique intérieure du tube externe 10. Lors de l'étape de fibrage, un chauffage très intensif est appliqué à l'ensemble 10-11 de sorte à obtenir une fusion locale entre la zone de gaine périphérique 110 de la préforme mère 11 et le tube externe 10 afin d'occuper le volume 12 initialement libre.

Ce chauffage intensif présente l'inconvénient majeur d'induire une déformation et une excentricité de la zone de coeur 111 de la préforme mère 11, et par voie de conséquence une déformation et une excentricité du coeur de la fibre optique obtenue, très préjudiciables à la qualité de cette fibre. Ces déformation et excentricité du coeur de la fibre conduisent par exemple à des pertes importantes dans la réalisation d'épissures entre fibre de ligne en verre silice et portion de fibre amplificatrice en verre fluoré pour la réalisation d'un amplificateur optique.

D'autre part, il a été décrit (JP-A-06 056 473) une préforme et une fibre optique comprenant trois zones de verre fluoré de type ZBLAN correspondant au barreau de coeur éventuellement dopé par une terre rare, à une zone intermédiaire, et à une zone externe, en vue de réaliser un guide optique de rapport coeur/gaine déterminé.

La présente invention vise à remédier à l'inconvénient précité. Un premier objectif de l'invention est de fournir une préforme pour fibre optique monomode propre à la fabrication d'une fibre optique monomode. Un second objectif de l'invention est de fournir un procédé de fabrication d'une telle fibre optique monomode. Un autre objectif de l'invention est de fournir une fibre optique monomode possédant un coeur sensiblement circulaire et centré.

A cette fin, une préforme pour fibre optique monomode comprenant une préforme mère logée dans un tube externe en laissant un volume libre entre une surface extérieure de la préforme mère et une surface intérieure du tube externe, ladite préforme mère comprenant une zone de coeur et une zone de gaine périphérique à ladite zone de coeur, est caractérisée selon l'invention en ce que dans le volume libre est disposé un tube intermédiaire qui possède une viscosité à température de fibrage qui est inférieure à une viscosité à température de fibrage desdits préforme mère et tube externe.

Selon une réalisation, la préforme est en verre fluoré, le tube intermédiaire possédant une température de transition vitreuse inférieure à une température de transition vitreuse des préforme mère et tube externe.

La zone de coeur de la préforme mère peut être dopée par des ions terres rares.

L'invention fournit également un procédé de fabrication d'une fibre optique monomode comprenant l'étape de fibrage d'une préforme pour fibre optique monomode du type décrite ci-dessus. La température de fibrage est par exemple sensiblement comprise entre 320° et 330°.

Pour la fabrication d'une fibre optique monomode dopée, on opère le fibrage d'une préforme dont la zone de coeur est dopée.

Une telle fibre optique dopée peut être utilisée pour la réalisation d'un amplificateur optique ou d'une source laser.

D'autres caractéristiques et avantages de la présente invention apparaîtront plus clairement à la lecture de la description suivante, en référence aux dessins annexés correspondants, dans lesquels :
- la figure 1, déjà commentée, montre une vue en coupe longitudinale axiale partielle d'un tube externe dans lequel est introduite une préforme mère pour la réalisation d'une fibre optique monomode selon la technique antérieure;
- la figure 2 montre une vue en coupe longitudinale axiale partielle d'un tube externe dans lequel sont introduits un tube intermédiaire et une préforme mère pour la réalisation d'une fibre optique monomode selon l'invention;
- la figure 3 illustre de manière schématique le fibrage de la préforme montrée à la figure 2; et
- la figure 4 montre un amplificateur optique.

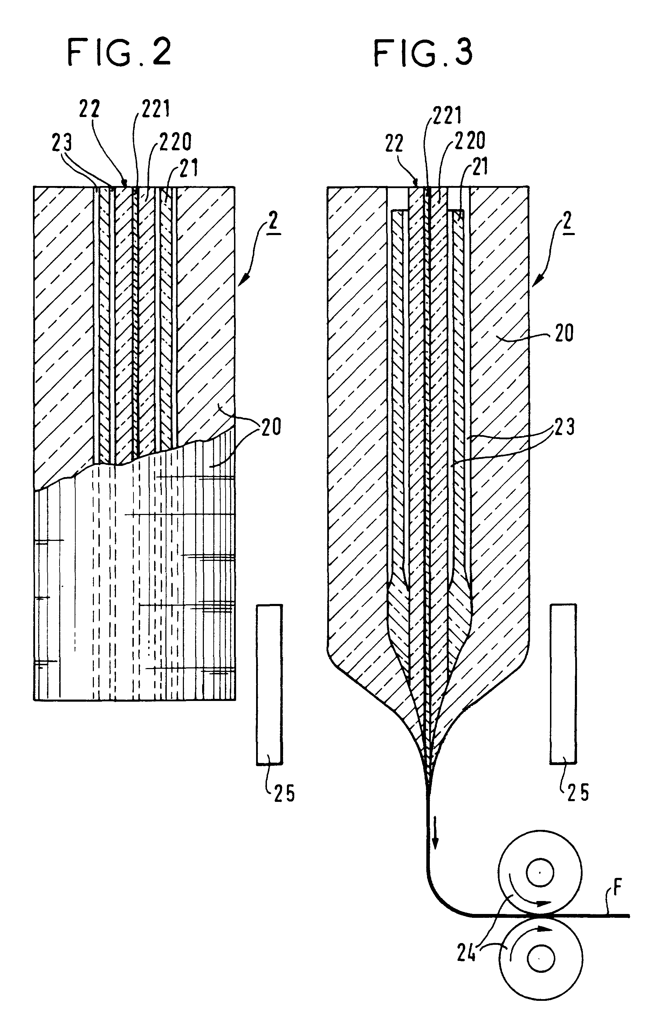

En référence à la figure 2, une préforme 2, typiquement monomode, selon l'invention comprend une préforme mère 22 logée dans un tube externe 20. Tous deux sont maintenus solidairement entre eux par des moyens mécaniques (non représentés). En outre, entre la préforme mère 22 et le tube externe 20, est disposé un tube intermédiaire 21 non maintenu qui a été obtenu par centrifugation. Ce tube intermédiaire 21 possède une viscosité à température de fibrage qui est inférieure à une viscosité à température de fibrage des préforme mère 22 et tube externe 20. La préforme mère 22 comprend une zone de coeur 221 et une zone de gaine 220 périphérique à la zone de coeur 221.

Selon une réalisation préférée de l'invention, la préforme est réalisée en verre fluoré. Pour cette réalisation, la caractéristique selon laquelle le tube intermédiaire 21 possède une viscosité à température de fibrage qui est inférieure à une viscosité à température de fibrage des préforme mère 22 et tube externe 20 se traduit en ce que le tube intermédiaire 21 possède une température de transition vitreuse inférieure à une température de transition vitreuse des préforme mère et tube externe.

A titre d'exemple, la zone de coeur 221 est définie par une composition molaire sensiblement égale à :

| | | | | |
|---|---|---|---|---|
| ZrF₄ | BaF₂ | LaF₃ | AlF₃ | NaF |
| 54% | 23% | 4% | 3% | 16% |

et possède un indice de réfraction proche de 1, 503.

La zone de gaine 220 et le tube externe 20 sont définis par une composition molaire sensiblement égale à :

| | | | | |
|---|---|---|---|---|
| ZrF₄ | BaF₂ | LaF₃ | AlF₃ | NaF |
| 53% | 19% | 4% | 4% | 20% |

et possèdent un indice de réfraction proche de 1, 498.

Le tube intermédiaire 21 est défini par une composition molaire sensiblement égale à :

| | | |
|---|---|---|
| ZrF₄ | BaF₂ | LaF₃ |
| 52% | 18% | 4% |
| AlF₃ | NaF | LiF |
| 4% | 20% | 2% |

et possède un indice de réfraction proche de 1, 499.

Il est à noter que la différence d'indice entre zone de gaine et zone de coeur peut être beaucoup plus importante, notamment dans le cas d'une fibre amplificatrice.

Dans les tableaux ci-dessus, Zr, Ba, La, Al, Na, Li et F désignent respectivement le zirconium, le baryum, le lanthane, l'aluminium, le sodium, le lithium et le fluor.

Ainsi, à titre explicatif, la zone de coeur 221 comprend 54% de tétrafluorure de zirconium, 23% de bifluorure de baryum, 4% de trifluorure de lanthane, 3% de trifluorure d'aluminium et 16% de monofluorure de sodium.

La température de fibrage de la préforme est sensiblement comprise entre T=320° et T=330°. A cette température, la zone de coeur 221 est définie par une viscosité environ égale à 10⁶ Po, la zone de gaine 220 et le tube externe 20 par une viscosité environ égale à 10^{5,5} Po et le tube intermédiaire 21 par une viscosité environ égale à 10⁵ Po. Po est l'unité de mesure Poise égale à 0,1 pascal-seconde.

Comme montré sur la figure 3, pour le fibrage, sont mises en oeuvre les étapes de chauffage 25, typiquement au moyen d'un four, de l'une des extrémités de la préforme et de traction 24 de la fibre F à partir de cette préforme chauffée. Dans la préforme, entre, d'une part, la surface cylindrique extérieure du tube intermédiaire 21 et la surface cylindrique intérieure du tube externe 20 et, d'autre part, la surface cylindrique intérieure du tube intermédiaire 21 et la surface cylindrique extérieure de la préforme mère 22, il existe des volumes cylindriques 23 qui sont libres de toute matière de préforme. Sachant que le tube intermédiaire 21 possède une viscosité à température de fibrage qui est inférieure à la viscosité à température de fibrage des préforme mère 22 et tube externe 20, le chauffage conduit, comme montré dans la portion inférieure de la préforme de la figure 3, à un "ramollissement" du tube intermédiaire 21 qui vient alors combler les volumes libres entre, d'une part, la surface cylindrique extérieure du tube intermédiaire 21 et la surface cylindrique intérieure du tube externe 20 et, d'autre part, la surface cylindrique intérieure du tube intermédiaire 21 et la surface cylindrique extérieure de la préforme mère 22. Le matériau constituant le tube intermédiaire 21 est destiné à faire partie intégrante de la fibre optique obtenue F.

Le tube intermédiaire 21 possédant une viscosité à température de fibrage qui est inférieure à la viscosité à température de fibrage des préforme mère 22 et tube externe 20, la température de fibrage résultant du chauffage 25 peut être très inférieure à la température de fibrage selon la technique antérieure pour des préformes du type montré dans la figure 1. En effet, le remplissage des volumes libres 23 ne nécessite pas d'appliquer une température de fibrage aussi élevée que dans la technique antérieure. Il en résulte alors une moindre excentricité et une moindre déformation du coeur de la fibre F. En outre, cette moindre température minimise le risque de cristallisation, en partie responsable de l'atténuation.

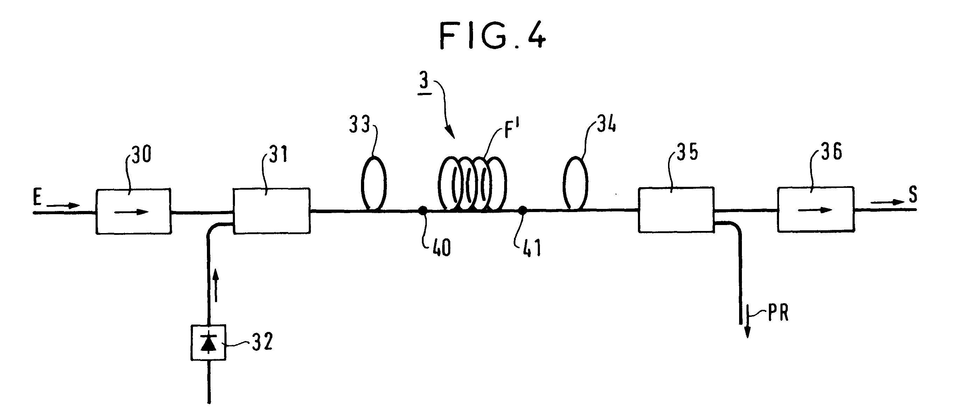

L'invention peut être appliquée à la réalisation d'un amplificateur optique 3 du type représenté à la figure 4. L'amplificateur 3 comprend en cascade un isolateur 30, un multiplexeur 31, une première portion de fibre intermédiaire 33, une portion de fibre amplificatrice selon l'invention F', une seconde portion de fibre intermédiaire 34, un démultiplexeur 35 et un isolateur 36. Le multiplexeur reçoit sur deux entrées respectives le signal issu de l'isolateur 30 et un signal de pompe produit par une diode 32. Le démultiplexeur 35 produit sur l'une de ses deux sorties un signal de pompe résiduel PR.

Le dopage d'une fibre en silice par des ions terres rares, de type néodymium, est utilisé pour fournir un amplificateur à fibre capable d'amplifier un signal optique dans la zone spectrale 1,30 µm - 1,36 µm. Cependant, des effets indésirables limitent les performances de ces amplificateurs à fibre silice. On utilise alors une fibre en verre fluoré dopée en ions terre rare (appelée ZBLAN) de type praséodyme Pr³⁺ pour des longueurs d'onde de 1,3 µm ou erbium Er³⁺ pour des longueurs d'onde de 1,55 µm. La fibre dopée amplificatrice F' est montée en série par épissurage 40 et 41 entre la première portion de fibre intermédiaire 33 et la seconde portion de fibre intermédiaire 34. Les épissures 40 et 41 sont typiquement réalisées au moyen d'une colle d'indice. Le dopage en ions terre rare s'effectue dans la zone de coeur 221 lors de la fabrication de la préforme mère (FIGS 2 et 3). Le coeur de la fibre F' résultant du fibrage d'une telle préforme étant particulièrement bien centré et circulaire, les pertes au niveau des épissures 40 et 41 sont alors très faibles, typiquement égales à 0,15 dB.

Une source laser peut également être obtenue en utilisant une fibre optique selon l'invention qui est en outre dopée par des ions terre rare. La source laser comprend alors deux moyens réfléchissants de résonance de part et d'autre de la portion de fibre dopée.

Il est à noter que dans la description qui précède, l'invention se limite à considérer un seul tube externe 20. Néanmoins, plusieurs tubes externes concentriques peuvent être utilisés pour former la préforme, auquel cas entre les surfaces exterieure et intérieure en regard de deux tubes externes respectifs, il est utilisé un tube intermédiaire qui possède une viscosité à température de fibrage qui est inférieure à une viscosité à température de fibrage de ces deux tubes externes.

## Revendications

1. Préforme pour fibre optique monomode comprenant une préforme mère (11; 22) logée dans un tube externe (10; 20) en laissant un volume libre entre une surface extérieure de la préforme mère et une surface intérieure du tube externe, ladite préforme mère (22) comprenant une zone de coeur (221) et une zone de gaine (220) périphérique à ladtie zone de coeur (221),
**caractérisée en ce que** dans ledit volume libre est disposé un tube intermédiaire (21) qui possède une viscosité à température de fibrage qui est inférieure à une viscosité à température de fibrage desdits préforme mère (22) et tube externe (20).

2. Préforme conforme à la revendication 1, **caractérisée en qu'**elle est en verre fluoré, ledit tube intermédiaire (21) possédant une température de transition vitreuse inférieure à une température de transition vitreuse desdits préforme mère et tube externe.

3. Préforme conforme à la revendication 1 ou 2, **caractérisée en ce qu'**une zone de coeur de ladite préforme mère est dopée par des ions terres rares.

4. Procédé de fabrication d'une fibre optique monomode, **caractérisé en ce qu'**il comprend l'étape de fibrage (23, 24) d'une préforme pour fibre optique monomode conforme à l'une quelconque des revendications 1 à 2.

5. Procédé conforme à la revendication 4, lorsqu'elle comprend une étape de fibrage d'une préforme pour fibre optique monomode selon la revendication 2,
**caractérisé par** une température de fibrage sensiblement comprise entre 320° et 330°.

6. Fibre optique monomode fabriquée selon un procédé conforme à l'une quelconque des revendications 4 et 5.

7. Procédé de fabrication d'une fibre optique monomode dopée, **caractérisé en ce qu'**il comprend l'étape de fibrage (23, 24) d'une préforme pour fibre optique monomode conforme à la revendication 3.

8. Fibre optique monomode dopée fabriquée selon le procédé conforme à la revendication 7.

9. Amplificateur optique comprenant une portion de fibre optique conforme à la revendication 8.

10. Source laser comprenant une portion de fibre optique conforme à la revendication 8.

## Patentansprüche

1. Vorform für eine optische Singlemode-Faser mit einer Mutter-Vorform (11; 22), die in einem externen Rohr (10; 20) unter Freilassung eines freien Volumens zwischen einer Außenfläche der Mutter-Vorform und einer Innenfläche des externen Rohrs untergebracht ist, wobei die Mutter-Vorform (22) eine Kernzone (221) und eine die Kernzone (221) umgebende Mantelzone (222) umfasst, **dadurch gekennzeichnet, dass** in dem freien Volumen ein Zwischenrohr (21) angeordnet ist, das eine Viskosität bei Ziehtemperatur besitzt, die kleiner ist als eine Viskosität bei Ziehtemperatur der Mutter-Vorform (22) und des externen Rohrs (20).

2. Vorform nach Anspruch 1, **dadurch gekennzeichnet, dass** sie aus fluoriertem Glas besteht, wobei das Zwischenrohr eine Glas-Übergangstemperatur besitzt, die kleiner ist als eine Glas-Übergangstemperatur der Mutter-Vorform und des externen Rohrs.

3. Vorform nach Anspruch 1 oder 2, **dadurch gekennzeichnet, dass** eine Kernzone der Mutter-Vorform mit Seltenerdionen dotiert ist.

4. Verfahren zum Herstellen einer optischen Singlemode-Faser, **dadurch gekennzeichnet, dass** es den Schritt des Ziehens (23, 24) einer Vorform für eine optische Singlemode-Faser nach einem beliebigen der Ansprüche 1 bis 2 umfasst.

5. Verfahren nach Anspruch 4, **dadurch gekennzeichnet, dass** wenn es einen Schritt des Ziehens einer Vorform für eine optische Singlemode-Faser nach Anspruch 2 umfasst, **gekennzeichnet ist durch** eine Ziehtemperatur von im Wesentlichen zwischen 320° und 330°.

6. Optische Singlemode-Faser, hergestellt nach einem Verfahren nach einem beliebigen der Ansprüche 4 und 5.

7. Verfahren zum Herstellen einer dotierten optischen Singlemode-Faser, **dadurch gekennzeichnet, dass** es den Schritt des Ziehens (23, 24) einer Vorform für eine optische Faser nach Anspruch 3 umfasst.

8. Dotierte optische Singlemode-Faser, hergestellt nach dem Verfahren nach Anspruch 7.

9. Optischer Verstärker mit einem optischen Faserabschnitt nach Anspruch 8.

10. Laserquelle mit einem optischen Faserabschnitt nach Anspruch 8.

## Claims

1. A preform for a monomode optical fiber, the preform comprising a mother preform (11; 22) housed in an outer tube (10; 20) and leaving an empty volume between an outside surface of the mother preform and an inside surface of the outer tube, said mother preform (22) comprising a core zone (221) and a cladding zone (220) peripheral to said core zone (221), **characterized in that** an intermediate tube (21) is disposed in said empty volume, the intermediate tube possessing viscosity at fiber-drawing temperature which is less than the viscosity(ies) at fiber-drawing temperature of said mother preform (22) and of said outer tube (20).

2. A preform according to claim 1, **characterized in that** it is made of fluoride glass, said intermediate tube (21) possessing a vitreous transition temperature lower than the vitreous transition temperature of said mother preform and of said outer tube.

3. A preform according to claim 1 or 2, **characterized in that** the core zone of said mother preform is doped with rare earth ions.

4. A method of manufacturing a monomode optical fiber, **characterized in that** it includes the step (23, 24) of drawing a fiber from a preform for a monomode optical fiber according to claim 1 or 2.

5. A method according to claim 4, when it includes a step of drawing a fiber from a preform for a monomode optical fiber according to claim 2, **characterized by** a fiber-drawing temperature lying substantially in the range 320°C to 330°C.

6. A monomode optical fiber made by a method according to claim 4 or 5.

7. A method of manufacturing a doped monomode optical fiber, **characterized in that** it includes the step (23, 24) of drawing a fiber from a preform for a monomode optical fiber according to claim 3.

8. A doped monomode optical fiber made by the method according to claim 7.

9. An optical amplifier including a portion of optical fiber according to claim 8.

10. A laser source including a portion of optical fiber according to claim 8.
